# EUROPÄISCHE PATENTANMELDUNG

(11) **EP 0 651 173 A1**
(43) Veröffentlichungstag der Anmeldung: **03.05.1995**
(21) Anmeldenummer: 94116683.7
(22) Anmeldetag: 22.10.1994
(51) Int. Cl.: F16F 1/12, G05D 16/06

(54) **Vorrichtung zur Einstellung der Federkraft einer Feder**

(30) Priorität: 27.10.1993 DE 4336583
(71) Anmelder: G. Kromschröder Aktiengesellschaft, D-49080 Osnabrück (DE)
(72) Erfinder: Standke, Gerhard, D-75334 Straubenhardt (DE); Dittrich, Herbert, D-76187 Karlsruhe (DE)

(57) **Zusammenfassung**

Die Erfindung betrifft eine Vorrichtung zur Einstellung der Federkraft einer Feder, insbesondere einer Sollwertfeder in einem Gasdruckregler mittels einer Einstellschraube (7), die in einer Gewindebohrung (6) schraubbar ist. Die Stellschraube (7) wird in der Gewindebohrung (6) von mindestens einer Einstellfeder (3) mit einer Kraft verspannt, die größer als die maximal einstellbare Federkraft der Feder ist. Die Konstruktion ermöglicht eine feinfühlige genaue und gut reproduzierbare Einstellung der Federkraft der Feder.

## Beschreibung

Die Erfindung betrifft eine Vorrichtung zur Einstellung der Federkraft einer Feder, insbesondere einer Sollwertfeder in einem Gasdruckregler mittels einer Einstellschraube, die an eine Gewindebohrung schraubbar ist.

Derartige Vorrichtungen sind aus der Praxis bekannt. Bei Gasdruckreglern ist bei einer üblichen Ausführungsform die Gewindebohrung im Gehäuse. Die Einstellschraube beaufschlagt direkt die Feder.

Die Einstellbarkeit der Federkraft ist verbesserungsbedürftig, weil das stets vorhandene Spiel zwischen Einstellschraube und Gewindebohrung die feinfühlige genaue und reproduzierbare Einstellung erschwert. Weiterhin wird der Stellvorgang durch den Handhabungsdruck auf die Stellschraube gestört.

Aufgabe der Erfindung ist es demgemäß eine einfach aufgebaute Vorrichtung der eingangs genannten Art zu schaffen, die eine feinfühlige genaue und gut reproduzierbare Einstellung der Federkraft ermöglicht.

Zur Lösung dieser Aufgabe ist die Vorrichtung nach der Erfindung, dadurch gekennzeichnet, daß die Einstellschraube in der Gewindebohrung von mindestens einer Einstellfeder mit einer Kraft verspannt wird, die größer als die maximal einstellbare Federkraft der Feder ist.

Im Regelfall ist die Verwendung einer Einstellfeder ausreichend.

Die Federkraft der Feder kann in genauer gut reproduzierbarer Weise feinfühlig und genau eingestellt werden. Insbesondere die Einstellung des Anfangsdruckes wird dadurch wesentlich erleichtert. Außerdem ist die Einstellung erschütterungsfrei.

Eine bevorzugte Ausführungsform ist, dadurch gekennzeichnet, daß die Einstellfeder eine Auflagefläche für die Feder aufweist und daß in der Auflagefläche die Gewindebohrung angeordnet ist. Die Einstellschraube arbeitet somit in der Einstellfeder, welche die Stellbewegung an die Feder überträgt.

Vorzugsweise ist die Einstellfeder als gewölbte Tellerfelder ausgebildet. Diese kann als einfaches Stanzteil gefertigt werden und weist nur geringe Bauhöhe auf.

Eine besonders vorteilhafte Ausführungsform ist, dadurch gekennzeichnet, daß sich von der Auflagefläche innerhalb des Tellerprofils spiralförmig verlaufende Abschnitte erstrecken. Die Abschnitte bilden Federarme, die ein Rutschen der Einstellfeder verhindern.

Die Erfindung wird im folgenden anhand einer bevorzugten Ausführungsform der erfindungsgemäßen Vorrichtung im Zusammenhang mit der Zeichnung näher erläutert.

Die Zeichnung zeigt in:

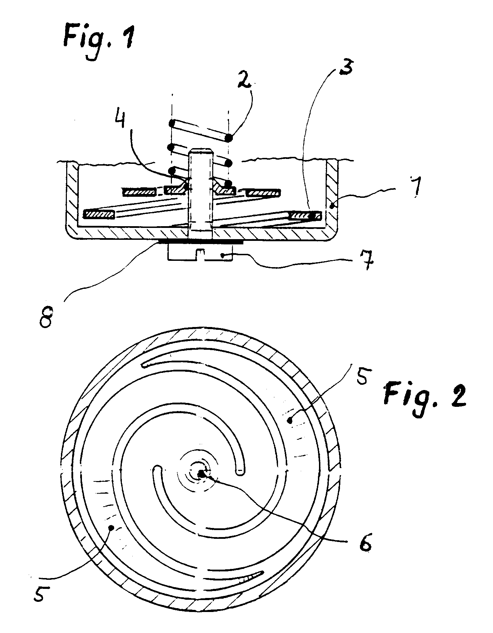

- Fig. 1: einen Teil-Längsschnitt durch die Vorrichtung;
- Fig. 2: eine Draufsicht der Vorrichtung.

Die bevorzugte Ausführungsform ist besonders zum Einsatz in einem Gasdruckregler geeignet. In einem Gehäuse 1 befindet sich eine Druckfeder 2. Die Druckfeder arbeitet als Sollwertfeder und beaufschlagt eine nicht dargestellte Vergleichsmembran. Eine Einstellfeder 3 weist eine Auflagefläche 4 für die Druckfeder auf. Die Auflagefläche 4 ist zur besseren Zentrierung der Druckfeder 2 kegelstumpfartig ausgebildet. Die Einstellfeder ist als gewölbte Tellerfeder ausgebildet, wobei sich von der Auflagefläche 4 innerhalb des Tellerprofils spiralförmig verlaufende Abschnitte 5 zum Gehäuse 1 hin verlaufen. Die Abschnitte 5 bilden Federarme, die ein Rutschen der Einstellfeder im Gehäuse verhindern.

In der Auflagefläche ist eine Gewindebohrung 6 angeordnet. In die Gewindebohrung ist eine Einstellschraube 7 einschraubbar. Eine Gleitscheibe 8 befindet sich zwischen den Kopf der Einstellschraube 7 und dem Gehäuse 1. Die Einstellfeder verspannt die Stellschraube in der Gewindebohrung mit einer Kraft, die größer als die maximal einstellbare Federkraft der Druckfeder ist. Auf diese Weise ist die Federkraft der Druckfeder in einfacher, gut reproduzierbarer Weise feinfühlig und genau einzustellen. Außerdem ist die Einstellung erschütterungsfrei. Die Konstruktion verhindert außerdem, daß der Stellvorgang durch den Handhabungsdruck auf die Stellschraube gestört wird. Schließlich ist vorteilhaft, daß die Einstellfeder als einfaches Stanzteil geringer Bauhöhe ausgebildet werden kann und einfach montierbar ist.

## Patentansprüche

1. Vorrichtung zur Einstellung der Federkraft einer Feder (2), insbesondere einer Sollwertfeder in einem Gasdruckregler mittels einer Einstellschraube (7), die in eine Gewindebohrung (6) schraubbar ist,
dadurch gekennzeichnet,
daß die Einstellschraube (7) in der Gewindebohrung (6) von mindestens einer Einstellfeder (3) mit einer Kraft verspannt wird, die größer als die maximal einstellbare Federkraft der Feder (2) ist.

2. Vorrichtung nach Anspruch 1,
dadurch gekennzeichnet,
daß die Einstellfeder (3) eine Auflagefläche (4) für die Feder (2) aufweist und daß in der Auflagefläche (4) die Gewindebohrung (6) angeordnet ist.

3. Vorrichtung nach Anspruch 2,
dadurch gekennzeichnet,
daß die Auflagefläche (4) für die Feder (2) kegelstumpfartig ausgebildet ist.

4. Vorrichtung nach einem der Ansprüche 1 bis 3,
dadurch gekennzeichnet,
daß die Einstellfeder (3) als gewölbte Tellerfeder ausgebildet ist.

5. Vorrichtung nach Anspruch 4,
dadurch gekennzeichnet, daß sich von der Auflagefläche (4) innerhalb des Tellerprofils spiralförmig verlaufende Abschnitte (5) erstrecken.
